Europäisches Patentamt

European Patent Office

Office européen des brevets

(11) Numéro de publication: **0 351 473 B1**

## FASCICULE DE BREVET EUROPEEN

(45) Date de publication de fascicule du brevet: **08.07.92**    (51) Int. Cl.5: **A01K 1/015**

(21) Numéro de dépôt: **88401849.0**

(22) Date de dépôt: **18.07.88**

(54) **Procédé de fabrication de granulés à usage de litière pour chat.**

(43) Date de publication de la demande:
**24.01.90 Bulletin 90/04**

(45) Mention de la délivrance du brevet:
**08.07.92 Bulletin 92/28**

(84) Etats contractants désignés:
**DE ES FR**

(56) Documents cités:
**GB-A- 2 098 448**
**GB-A- 2 154 116**
**US-A- 4 263 873**

(73) Titulaire: **Tranie, Bernard**
**8 Passage Boulay**
**F-75017 Paris(FR)**

(72) Inventeur: **Tranie, Bernard**
**8 Passage Boulay**
**F-75017 Paris(FR)**

Rank Xerox (UK) Business Services

## Description

La présente invention concerne la fabrication de granulés cellulosiques trouvant une application intéressante pour la réalisation de litières pour animaux domestiques.

On sait que l'attapulgite et la sépiolite sont les matériaux les plus couramment utilisés pour la litière des animaux domestiques, en particulier pour les chats.

Si ces matériaux présentent des avantages certains par rapport à la sciure de bois, la vermiculite et autres matériaux destinés au même usage, il n'en reste pas moins qu'ils présentent un certain nombre d'inconvénients tels qu'en particulier une capacité d'absorption des liquides relativement limitée, ce qui nécessite un renouvellement fréquent, voire quotidien, de la litière, la possibilité d'entrainement de particules fines par les pattes des aninaux au contact de ces litières et la dispersion des particules autour de celles-ci, une densité relative élevée et une aptitude certaine d'adhérence de la partie usagée de la litière au fond du bac la contenant, ce qui nécessite un nettoyage par codage et rinçage de ce fond à chaque renouvellement de la litière.

Pour pallier ces inconvénients, d'autres matériaux et notamment des matériaux à base de fibre de cellulose, ayant des propriétés naturelles d'absorption ont été utilisés.

Plusieurs demandes de brevets ont donc été déposées sur la nature de la fabrication et l'usage de granulés à base de fibre de cellulose pour la réalisation de litière pour chat.

Bien qu'apportant certaines améliorations par rapport aux matériaux minéraux traditionnels, ces techniques présentent d'autres inconvénients.

Le brevet de CHRISTIANSON (US 4263873 du 28.04.81) décrit un procédé de fabrication de pellet à partir de déchets de papier en y ajoutant de l'eau pour assurer la cohésion des granulés et permettre la fabrication à partir de machines à pellet traditionnelles.

Le produit obtenu a une forte humidité (comprise entre 10 à 25 %) et une densité élevée (de 0,75 à 1,1) qui le rend mal adapté à l'usage de litière.

Le brevet de NIPPON PET FOOD (EP 0121055 du 10.10.84) repose sur l'incorporation de végétaux à de vieux papiers. Il est essentiellement basé sur la récupération des déchets de plantes et met à profit la présence de la chlorophylle.

Le pouvoir absorbant du produit obtenu reste faible.

De plus la nécessité d'ajouter d'importantes quantités d'eau (jusqu'à 110 %) pour sa fabrication est un inconvénient majeur.

Le brevet de KOK (EP 0039522 du 06.02.81) concerne la valorisation des eaux résiduaires de papeterie très faiblement chargée (de l'ordre de 1 %) en pulse de papier et fibre de cellulose. La cohésion des granulés est assurée grâce à un liant à base d'amidon, liant de base utilisé par toute l'industrie papetière. Leur fabrication se fait en phase très humide. Une addition d'eau comprise entre 40 % et 80 % est préconisée.

Avant d'être stockés les granulés doivent être séchés. Le liant traditionnel amidon diminue le pouvoir absorbant instantané des fibres de cellulose.

La fabrication utilise les machines classiques de l'industrie papetière. Du fait des quantités d'eau à évacuer, le procédé de fabrication consomme beaucoup d'énergie et n'est pas économique.

Le brevet ITF (F 2576524 du 29.01.85) concerne la fabrication de pellets à partir de déchets de lin. Il s'agit d'un produit ligno-cellulosique dont les caractéristiques sont éloignées des produits fabriqués à base de déchets de papier. Comme les produits précédents, il doit être fabriqué en présence d'eau.

D'autres brevets concernent également la fabrication de granulés à usage de litière pour chat.

Le brevet HILL (US 4625679 du 02.12.86) ne concerne pas directement la fabrication des granulés mais concerne l'opération d'émiettage des granulés déjà fabriqués qui transforme les pellets après leur fabrication.

Le brevet PEARCE (GB 2154411 GA du 14.02.84) propose l'usage de vieux journaux déchiquetés utilisés tels quels sans pelletisation.

Le brevet SOKOLOWSKI (US 4619862 du 28.10.86) concerne la fabrication de granulés sous forme de pulse de papier encapsulé. On obtient ainsi un produit très différent de celui proposé par les autres brevets. L'encapsulation limite le pouvoir absorbant et enrobant. La méthode de fabrication décrite éxige des réglages précis et impose une mise en oeuvre difficile.

La caractéristique commune de la plupart de ces brevets réside en ce qu'ils utilisent un produit, les déchets de fibres de cellulose, dont la mise en oeuvre se fait par voie humide. Le produit devant ultérieurement être séché.

La présente invention a pour but de fournir un matériau qui, tout en ayant une tenue mécanique correcte, offre le meilleur compromis en densité, en absorption, en capacité d'enrobage pour être adapté à

2

l'usage tout en étant fabriqué de façon économique, c'est-à-dire par voie sèche.

La présente invention permet de fabriquer économiquement c'est-à-dire en évitant toute présence d'eau avant l'opération de pressage des granulés à base de déchets de vieux papier d'une dimension inférieure à 1 cm, dont la densité apparente soit inférieure à 0,5, dont le pouvoir absorbant soit supérieur à 180 %, dont la cohésion soit assurée et qui soit accompagné lors de la fabrication d'un taux de fine inférieur à 10 % mais suffisant pour assurer l'enrobage des matières fécales.

Selon une caractéristique essentielle, le procédé consiste à :
- broyer lesdits déchets de papier pour les réduire en morceaux d'une taille T exprimée en millimètre et en moyenne de 40 comprise entre 20 et 50
- presser les déchets à travers une filière dont l'épaisseur E exprimée en millimètre est définie par la relation $E = \alpha T^2$ dans laquelle le coéfficient $\alpha$ a une valeur comprise entre 0,025 et 0,035, et dont le diamètre D exprimé en millimètre des orifices 2 définis par la relation : $\frac{1}{8} \leq \frac{D}{E} \leq \frac{1}{12}$
- couper les boudins de déchets de papier comprimé en sortie de filière, de sorte que la longueur L exprimée en millimètre des granulés soit définie par la relation :

$$LxE = \beta$$

dans laquelle le coéfficient $\beta$ a une valeur comprise entre 600 et 700

Selon une caractéristique préférentielle le procédé selon la revendication 1 pour la relation $E = \alpha T^2$ le coéfficient $\alpha$ soit préférentiellement égal à 0,03, que le rapport D/E doit être égal à $\frac{1}{10}$ et que pour la relation $LxE = \beta$, le coéfficient $\beta$ doit être égal à 650.

Selon une autre caractéristique essentielle le procédé consiste à :
- broyer lesdits déchets pour les réduire en morceaux à une taille T comprise entre 10 et 100 mm
- presser les déchets broyés à travers une filière dont l'épaisseur E exprimée en millimètre est définie par la relation $E = \alpha T^2$ dans laquelle le coéfficient $\alpha$ a une valeur comprise entre 0,01 et 0,03 et dont le diamètre D exprimé en millimètre des orifices 2 sont définis par la relation $\frac{1}{8} \leq \frac{D}{E} \leq \frac{1}{12}$
- couper les boudins de déchets de papier comprimés en sortie de filière de sorte que la longueur L exprimée en millimètre des granulés soit définie par la relation :

$$LxE = 450 \pm 200$$

- additionner des déchets de matière plastique servant de liant dans une proportion comprise entre 1 % et 5 %

Selon une caractéristique préférentielle le pourcentage de déchets de matières plastiques incorporé aux granulés doit être de 2 %.

Selon une autre caractéristique préférentielle on obtient des granulés ayant :
- une densité inférieure à 0,5
- un pouvoir absorbant supérieur à 180 %
- une dimension inférieure à 10 mm
- une présence de fines à un taux inférieur à 5 %

Les essais ont été conduits sur une machine à fabriquer les pellets traditionnelle, alimentée par des déchets de papier déchiquetés par un broyeur à marteau.

Cette machine de 4 T/H de capacité nominale était équipée d'une presse à filière plate. D'autres caractéristiques et les avantages de l'invention ressortent plus clairement de la description qui va suivre en regard des dessins annexés sur lesquels :
- la figure 1 est une vue en élévation partiellement en coupe d'un exemple de "presse à filière"
- la figure 2 est une vue en perspective correspondante.

La presse consiste pour l'élément filière proprement dit en plaque 1 ayant une épaisseur qui sur les machines traditionnelles est de 150 mm. Cette plaque fixe est percée de plusieurs orifices 2.

Des couteaux 3 sont prévus à la sortie de chacuns de ces orifices et montés de façon appropriée permettant la découpe des "boudins" issus de ces orifices 2.

Sur la plaque 1 est prévu plusieurs galets 4 montés, en rotation autour d'un axe commun 5 (flèche F2), ledit axe 5 étant lui-même entrainé en rotation autour de l'axe X-Y.

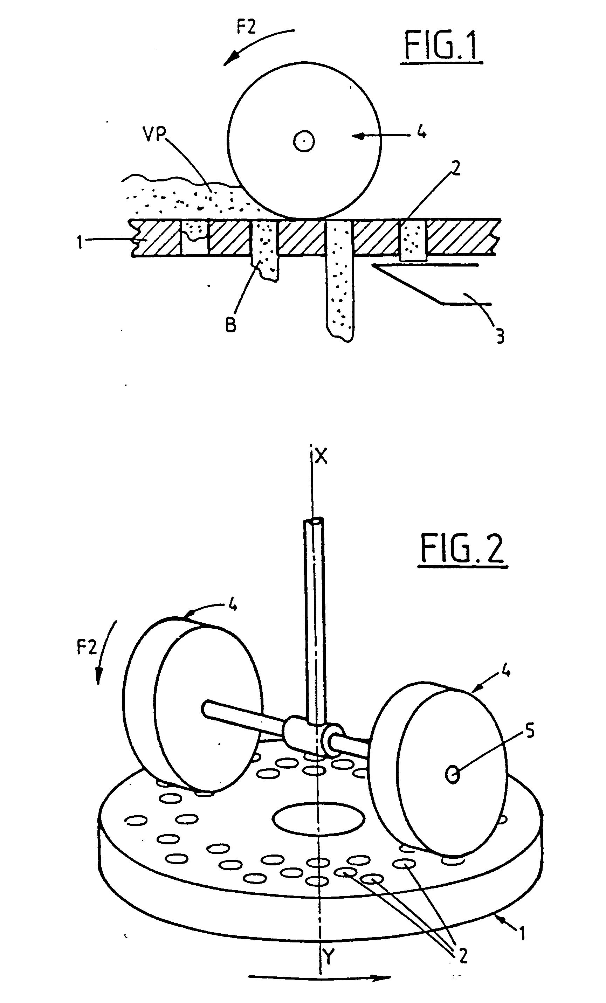

On comprendra alors aisément que la masse des déchets de vieux papiers déchiquetés schématisée sur la figure 1 et portant la référence VP qui se trouve soumise à l'action des galets et à la pression qu'exercent ces derniers sur la plaque 1 de la filière sera forcée dans les orifices 2 pour en sortir sous forme de boudins ou de bâtonnets 3 qui seront découpés par l'action des couteaux 3.

Si on fabrique les pellets de façon traditionnelle, c'est-à-dire avec des déchets de papier tout venant, un broyage normal donnant des morceaux dont la dimension peut atteindre 10 cm, une filière de 150 mm d'épaisseur, une coupe à plus de 2 cm de longueur pour les bâtonnets, on observe qu'effectivement, si on n'ajoute pas d'eau, la densité apparente des bâtonnets obtenus oscille entre 0,7 et 1 (donc beaucoup trop élevé pour l'usage envisagé). D'autre part des problèmes de fabrication apparaissent, liés au bourrage de la filière entrainant une élévation de température dangereuse (supérieure à 180°C) et des contraintes mécaniques importantes provoquent des avaries sur le matériel.

De manière inattendue, il a pu être réalisé des pellets sans addition d'eau tout en obtenant une densité de produit final inférieur à 0,5 et dont les propriétés mécaniques restaient suffisantes.

Pour que ce résultat soit expliqué et reproduisible, le demandeur a cerné les conditions optimales pour obtenir les granulés désirés sans addition, ni d'eau, ni de liant, en faisant varier de façon indépendante les six facteurs suivants :
- la qualité des déchets de papier
- la dimension des morceaux après broyage et avant pressage
- l'épaisseur de la filière
- la nature de liant à ajouter
- le pourcentage de liant à ajouter
- la longueur de coupe des bâtonnets

Ces conditions correspondent à un ajustement précis des différents facteurs cités plus haut.

Le procédé comprend les étapes suivantes :

Premièrement une phase de déchiquetage réalisée par un broyeur à marteau classique au cours de laquelle la taille optimum des déchets de papier sera comprise entre 2 et 4 cm. La composition des déchets de papier qui donne le meilleur résultat correspond à un mélange à 80 % de vieux papiers et cartons de récupération et à 20 % de déchets de papier récupéré en sortie de triage des usines de traitement des ordures ménagères.

Deuxièmement une phase de pressage à travers une filière dont l'épaisseur est de 80 mm et dont le diamètre des orifices 2 de la filière est de 8 mm.

Troisièmement une phase de coupe des boudins de déchets de papier comprimés en sortie de filière avec des couteaux réglés de telle sorte que la longueur des granulés soit de 8 mm.

D'autre part il a été constaté que pour réunir les conditions nécessaires à la fabrication, selon le procédé décrit, de granulés ayant une densité inférieure à 0,5, une absorption supérieure à 180 % et une tenue mécanique suffisante, dans d'autres dimensions que celle obtenue dans le procédé, le choix d'une autre dimension de granulés nécessite que certaines relations, entre la taille des déchets de papier broyés, l'épaisseur de la filière, le diamètre des orifices 2 et la longueur des granulés soient respectées.

Il a été également constaté que les variations de pourcentage dans le mélange des déchets de vieux papiers selon leurs origines n'apporte pas les résultats de façon importante.

Les relations qui ont été mises en évidence sont les suivantes :
- L'épaisseur de la filière doit être déterminée en fonction de la taille des morceaux de déchets de papier broyés selon une relation approchée de la formule $E = \alpha T^2$ dans laquelle E est l'épaisseur de la filière exprimée en millimètre, T est la dimension des déchets broyés et $\alpha$ un coéfficient égal à 0,03 ± 0,005.
- Le diamètre des orifices 2 doit être déterminé en fonction de l'épaisseur de la filière selon le rapport D/E = 0,1 ± 0,025 dans lequel D est le diamètre des orifices 2 exprimé en millimètre et E est l'épaisseur de la filière exprimé en millimètre.
- La longueur des granulés doit être déterminé selon le rapport LxE = 650 ± 50 dans lequel L est la longueur désirée des granulés, E est l'épaisseur de la filière exprimée en millimètre.

Lorsque les conditions optimales ne sont pas réunies les risques sont de deux natures différentes. Soit les déchets broyés sont trop comprimés, auquel cas la densité des granulés obtenus est supérieur à 0,5 et leur pouvoir absorbant diminue, soit les déchets broyés sont insuffisamment comprimés, auquel cas les granulés n'ont plus une cohésion suffisante, ils se délitent et le taux de fines, c'est-à-dire de poussière, peut dépasser 10 %.

Le demandeur a constaté que l'ajout de quelques pour cent de liant permettait de s'affranchir de ces réglages pointus.

C'est ainsi que l'addition de déchets de matière plastique, plus particulièrement de déchets de films plastique ou de sacs d'emballage plastique constitués en majeur partie de polyéthylène, sous forme déchiquetés, dans une proportion comprise entre 1 % et 5 % et préférentiellement de 2 % environ, permet de faire varier de façon plus large les rapports indiqués précédemment.

Les morceaux de déchets de matières plastiques déchiquetés doivent avoir une taille comparable à celle des morceaux de déchets de vieux papiers broyés auxquels ils sont incorporés.

Pour que le pouvoir absorbant des granulés ainsi obtenus ne soit pas diminué, la taille les morceaux de déchets de matière plastique ne doit pas excéder le double de la taille des morceaux de déchets de papier broyés.

L'application d'un tel liant évite également l'addition d'eau.

Dans ce cas, par rapport au procédé précédemment décrit, il est nécessaire d'incorporer entre la première phase de déchiquetage et la deuxième phase de pressage à travers la filière, une phase intermédiaire de mélange au cours de laquelle les déchets de vieux papiers broyés sont intimement mélés aux déchets de matière plastique déchiquetés.

Cette phase intermédiaire de mélange peut être réalisée avec une vis mélangeuse traditionnelle dont la capacité nominale doit être identique à la capacité nominale de la presse à pellet si la fabrication des granulés est faite en continu. L'addition d'un tel liant permet de faire varier les coéfficients des relations précédentes dans les limites suivantes :

- l'épaisseur de la filière peut être réduite de telle sorte que dans la relation $E = \alpha T^2$ le coéfficient $\alpha = 0,02 \pm 0,01$
- le diamètre des orifices 2 déterminé en fonction de l'épaisseur de la filière peut être choisi dans les limites plus larges définies comme suit : $\frac{1}{6} \leq \frac{D}{E} \leq \frac{1}{12}$
- la longueur des granulés dépend du nouveau rapport : $LxE = 450 \pm 200$

Ce dernier point est important car le pouvoir absorbant des bâtonnets dépend de tous les facteurs précédents. Par exemple, toutes conditions y compris la densité, restant égale par ailleurs, le pouvoir dépend de la longueur de coupe dans un rapport qui n'est pas équivalent au rapport surface-volume des granulés fabriqués. La comparaison suivante le montre :

CONDITIONS :

Epaisseur filière 50 mm
densité 0,5
liant polyéthylène inférieure à 2 %

| ABSORPTION | LONGUEUR DE COUPE | |
|---|---|---|
| | 8mm | 12 mm |
| en 5 min | 100 % | 12 % |
| en 30 min | 164 % | 76 % |
| en 2 h 30 | 192 % | 124 % |

Les granulés obtenus par le procédé décrit par le demandeur ont les caractéristiques suivantes :
- une densité inférieure à 0,5, une cohésion suffisante, une dimension inférieure à 1 cm, un taux de fine inférieur à 10 % mais non nul pour permettre l'enrobage des matières fécales par souci hygiènique, et un pouvoir absorbant en moyenne de 180 % supérieur à 150 % en 20 min.

**Revendications**

**1.** Procédé pour la fabrication de granulés à usage de litière pour chat à partir de déchets de papier caractérisé en ce qu'il consiste en procédant par voie sèche à :
- broyer lesdits déchets de papier pour les réduire en morceaux d'une taille T exprimée en millimètre et comprise entre 20 et 50 et en moyenne inférieure à 40
- presser les déchets broyés à travers une filière dont l'épaisseur E (1) exprimée en millimètre est définie par la relation $E = \alpha T^2$ dans laquelle le coéfficient $\alpha$ est égal à $0,03 \pm 0,005$ et dont le diamètre D exprimé en millimètre des orifices (2) est défini par la relation : $\frac{1}{8} \leq \frac{D}{E} \leq \frac{1}{12}$
- couper les boudins de déchets de papier comprimé en sortie de filière, de sorte que la longueur L exprimée en millimètre des granulés soit définie par la relation : $LxE : 650 \pm 50$

**2.** Procédé selon la revendication 1 caractérisée en ce que pour la relation $E = \alpha T^2$ le coéfficient $\alpha$ soit préférentiellement égal à 0,03 que le rapport D/E soit préférentiellement égal à $\frac{1}{10}$ et que la relation LxE soit égal à 650.

**3.** Procédé pour la fabrication de granulés à usage de litière pour chat à partir de déchets de papier caractérisés en ce qu'il consiste en procédant par voie sèche à:
- broyer lesdits déchets pour les réduire en morceaux à une taille T comprise entre 10 et 100 mm
- mélanger à ces déchets de papier broyés des déchets de matière plastique dont la taille moyenne est équivalente à celle des déchets de papier broyés dans une proportion d'apport comprise entre 1% et 5%.
- presser le mélange des déchets de papier et de matière plastique broyés à travers une filière dont l'épaisseur exprimée en millimètre est definie par la relation $E = \alpha T^2$ dans laquelle le coéfficient $\alpha = 0,02 \pm 0,01$ et dont le diamètre D exprimé en millimètre des orifices (2) sont définis par la relation $1/6 \leq D/E \leq 1/12$
- couper les boudins de déchets de papier comprimés en sortie de filière de sorte que la longueur L exprimée en millimètre des granulés soit définie par la relation $LxE = 450 \pm 200$

4. Procédé selon la revendication 3 caractérisé en ce que les déchets de matière plastique sont constitués à plus de 50% de films d'emballage polyéthylène.

5. Procédé selon la revendication 4 caractérisé en ce que le pourcentage des déchets de matière plastique incorporé aux granulés soit préférentiellement de 2%

## Claims

1. Method to manufacture pellets for cat litter use with rough paper waste without additionnal water or lubrificate consisting in:
- pounding the rough paper waste to reduce them in pieces up to a size T of 20 to 50 millimeters with an average of 40 millimeters,
- pressing the pounded paper waste through a draw-plate with a thickness E(1) in millimeters in accordance to the relation $E = \alpha T^2$ in which the coefficient equal $0,03 \pm 0,005$ and the orifices diameters of the draw-plate D(2) in millimeters are in accordance to the relation $1/8 \leq D/E \leq 1/12$,
- cutting the slubs of paper waste pressed out of the draw-plate, so that the length L in millimeters of pellets so manufactured is defined in accordance to the relation $LxE = 650 \pm 50$.

2. Method as claimed in claim 1 wherein in the relation $E = \alpha T^2$ the coefficient $\alpha$ equal preferently 0,03, the report D/E equal preferently 1/10 and the report LxE equal preferently 650.

3. Method to manufacture pellets for a cat litter use with rough paper waste without additionnal water or lubrificate consisting in:
- pounding the rough paper waste to reduce them in pieces up to a size T of 10 to 100 millimeters,
- mixing the pounded paper waste with a ratio between 1 and 5% of plastics waste of the same size,
- pressing the mixture of pounded paper waste and pounded plastics waste through a draw-plate with a thickness E(1) in millimeters in accordance to the relation $E = \alpha T^2$ in which the coefficient equal $0,02 \pm 0,001$ and the orifices diameters D(2) in millimeters are in accordance to the relation $1/6 \leq D/E \leq 1/12$,
- cutting the slubs of the mixture of pounded paper waste and pounded plastics waste pressed out of the draw-plate, so that the length L in millimeters of pellets so manufactured is defined in accordance to the relation $LxE = 450 \pm 50$.

4. Method as claimed in claim 3 wherein more than 50% of plastics waste are constitued of packing polyethylenic products.

5. Mehod as claimed in claim 4 wherein the purcentage of plastics waste added to the paper waste to make the mixture is preferently 2%.

## Patentansprüche

1. Verfarhen zur Herstellung vom Granulat für Katzenstreu aus Papierabfällen, dadurch gekennzeichnet, daß es darin besteht, in einem Trockenvorgang
- diese Abfälle in kleine Stücke zu vermahlen, deren Größe T, in Millimetern ausgedrückt, zwischen 20 und 50 liegt und im Durchschnitt kleiner ist als 40 ;

- die zerkleinerten Abfälle über eine Düse zusammenzupressen, deren Stärke E (1), in Millimetern ausgedrückt, durch die Gleichung $E = \alpha T^2$ definiert wird, wobei $\alpha$ der Multiplikationsfaktor $0{,}03 + 0{,}005$ gleich ist und der Durchmesser (D) der Öffnungen (2), in Millimetern ausgedrückt, durch das Verhältnis $1/8 \leq D/E \leq 1/12$ definiert ist ;
- die zusammengepreßtzen Abfallpapierbälle am Ausgang der Düse zu schneiden, so daß die Länge L der Granulate, in Millimetern ausgedrückt, durch das Verhältnis $LxE = 650 \pm 50$ definiert ist.

2. Verfahren nach Anspruch 1, dadurch gekennzeichnet, daß der $\alpha$ Multiplikationsfaktor vorzugsweise 0,03 für die Gleichung $E = \alpha T^2$ gleich ist und daß das Verhältnis D/E vorzugsweise 1/10 gleich ist und daß die Beziehung $LxE = 650$ beträgt.

3. Verfarhen zur Herstellung vom Granulat für Katzenstreu aus Papierabfällen, dadurch gekennzeichnet, daß es darin besteht, durch einen Trockenvorgang:
   - diese Abfälle in kleine Stücke zu vermahlen, deren Größe T zwischen 10 und 100 mm liegt ;
   - diese zerkleinerten Papierabfälle mit Kunstoffabfällen zu mischen, deren Durchschnittsgröße der der zerkleinerten Papierabfälle etwa gleich ist, wobei das Mischverhältnis zwischen 1% und 5% liegt ;
   - diese Mischung aus zerkleinerten Papierabfällen und aus über eine Düse zusammengepreßten Kunstoffabfällen, deren Stärke, in Millimetern ausgedrückt, durch die Gleichung $E = \alpha T^2$ definiert wird, wobei der Multiplikationsfaktor $\alpha = 0{,}02 \pm 0{,}01$ gleich ist und der Durchmesser (D) der Öffnungen (2), in Millimetern ausgedrückt, durch das Verhältnis $1/6 \leq D/E \leq 1/12$ definiert ist.
   - die zusammengepreßten Abfallpapierbälle am Ausgang der Düse zu schneiden, so daß die Länge L der Granulate, in Millimetern ausgedrückt, durch das Verhältnis $LxE = 450 \pm 200$ definiert ist.

4. Verfahren nach Anspruch 3, dadurch gekennzeichnet, daß die Kunstoffabfälle über 50% aus Polyethylenverpackungsfolien bestehen.

5. Verfahren nach Anspruch 4, dadurch gekennzeichnet, daß der Anteil an Kunstoffabfällen in Granulat vorzugsweise 2% beträgt.

FIG.1

FIG.2